(19)

Europäisches
Patentamt
European
Patent Office
Office européen
des brevets

(11) **EP 4 563 827 A1**

(12) **EUROPEAN PATENT APPLICATION**
published in accordance with Art. 153(4) EPC

(43) Date of publication:
**04.06.2025 Bulletin 2025/23**

(21) Application number: **23871486.9**

(22) Date of filing: **07.08.2023**

(51) International Patent Classification (IPC):
**F15B 11/02** (2006.01)    **E02F 9/22** (2006.01)
**F15B 11/028** (2006.01)

(52) Cooperative Patent Classification (CPC):
**E02F 9/22; F15B 11/02; F15B 11/028**

(86) International application number:
**PCT/JP2023/028804**

(87) International publication number:
**WO 2024/070244 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 JP 2022157183**

(71) Applicant: **Hitachi Construction Machinery Co.,
Ltd.
Tokyo 110-0015 (JP)**

(72) Inventors:
• **KUMAGAI, Kento
Tsuchiura-shi, Ibaraki 300-0013 (JP)**

• **AMANO, Hiroaki
Tsuchiura-shi, Ibaraki 300-0013 (JP)**
• **KANEHAMA, Mitsuhiko
Tsuchiura-shi, Ibaraki 300-0013 (JP)**
• **ITOU, Ryousuke
Tsuchiura-shi, Ibaraki 300-0013 (JP)**
• **IMURA, Shinya
Tsuchiura-shi, Ibaraki 300-0013 (JP)**
• **NISHIKAWA, Shinji
Tsuchiura-shi, Ibaraki 300-0013 (JP)**

(74) Representative: **Manitz Finsterwald
Patent- und Rechtsanwaltspartnerschaft mbB
Martin-Greif-Strasse 1
80336 München (DE)**

(54) **WORK MACHINE**

(57)    An object of the present invention is to provide a
work machine that realizes excellent operability or controllability by controlling the pressure of an actuator with
high accuracy without causing a sharp rise in pressure or
hunting at a time of a start of operation of the actuator. To
this end, a controller calculates a pump first target flow
rate for reducing a difference between an actuator target
pressure and an actuator pressure, calculates a pump
second target flow rate for reducing a difference between
an actuator absorption flow rate and a pump flow rate,
calculates a pump final target flow rate on the basis of the
pump first target flow rate and the pump second target
flow rate, and controls a hydraulic pump according to the
pump final target flow rate.

[FIG. 3]

**EP 4 563 827 A1**

**Description**

Technical Field

The present invention relates to a work machine for performing oil supply and discharge control for hydraulic actuators provided to the work machine such as a hydraulic excavator, for example.

Background Art

In general, a work machine such as a hydraulic excavator, for example, is provided with various hydraulic actuators. As a system for performing oil supply and discharge control for such hydraulic actuators (hydraulic control system), there is widely known a conventional system which is configured to deliver a hydraulic operating fluid at a flow rate demanded by an operation command from a hydraulic pump, switch the supply and discharge directions of the hydraulic operating fluid for a hydraulic actuator by a directional control valve, control a supply flow rate of the hydraulic operating fluid from the hydraulic pump to the hydraulic actuator by a meter-in opening of the directional control valve, and control a discharge flow rate from the hydraulic actuator to a hydraulic operating fluid tank by a meter-out opening of the directional control valve.

In such a system, even when a sharp signal change is input from an operation lever as in a full lever input, for example, and the hydraulic pump sharply changes a delivery flow rate in response to the input signal, inertial bodies such as the actuator to be operated and a structure connected to the actuator cannot follow immediately. Therefore, at a time of a start of operation of the actuator, a difference occurs between a flow rate delivered from the hydraulic pump to the actuator and a flow rate absorbed by the actuator as the actuator operates. This leads to a sharp rise in pressure. Consequently, a shock due to a sharp acceleration of the actuator or a pressure surge occurs, so that there is a possibility of a decrease in operability in a case where an operator is manually operating the work machine or controllability in a case where a controller controls the operation of the actuator.

Accordingly, there is conventionally known a technology which ensures the operability of the work machine by switching the directional control valve to introduce the hydraulic operating fluid to the actuator, providing a bleed-off throttle for discharging part of a delivery oil of the hydraulic pump to the tank, adjusting an opening degree of the bleed-off throttle at a time of a start of operation of the actuator, and thereby adjusting the supply flow rate to the actuator or suppressing a sharp pressure variation (for example, Patent Document 1).

In addition, there is also known a technology which suppresses a sharp rise in the pressure of the actuator by sensing a delivery pressure of the hydraulic pump (pump pressure) by a pressure sensor, feeding back the delivery pressure to the controller, and controlling a pump flow rate according to an increase or decrease in the pump pressure (for example, Patent Document 2).

Prior Art Document

Patent Documents

Patent Document 1: JP-3403535-B2
Patent Document 2: JP-5130353-B2

Summary of the Invention

Problems to be Solved by the Invention

However, when the oil is discharged to the tank by the bleed-off throttle as in Patent Document 1, an energy loss is increased because the discharged hydraulic fluid constitutes a loss. In addition, because the opening characteristic of the bleed-off throttle is designed for specific operation, the performance of the bleed-off throttle may vary under various kinds of operation or various operation conditions. There is thus a possibility of impairing the operability or controllability at a time of a start of operation.

Meanwhile, when the pressure is measured and feedback control is used, as in Patent Document 2, certain pressure controllability can be maintained even under various kinds of operation or various operation conditions. However, there is always a delay time period until the pump changes the flow rate after a pump flow rate control command value is computed by use of the pressure at a time point of the measurement and the controller outputs a control command. No correction can be made for a pressure variation occurring during this delay time period. There is thus a possibility of being unable to control the pressure, depending on the performance of a feedback control system such as the operation speed of the actuator, response time lengths of components, and the computation performance of the controller.

The present invention has been made in view of the above-described problems. It is an object of the present invention to provide a work machine that realizes excellent operability or controllability by controlling the pressure of an actuator with high accuracy without causing a sharp rise in pressure or hunting at a time of a start of operation of the actuator.

Means for Solving the Problems

In order to achieve the above object, according to the present invention, there is provided a work machine including a machine body, a work device attached to the machine body, an actuator that drives the machine body or the work device, a hydraulic pump, a directional control valve that controls a flow of a hydraulic fluid supplied from the hydraulic pump to the actuator, an operation lever that gives an instruction for operation of the actuator, and a controller that controls the directional control valve according to an input amount of the operation lever. A pressure sensor that senses an actuator pressure as a pressure of the actuator is provided, and the controller is configured to calculate an actuator target pressure as a target pressure of the actuator on the basis of the input amount of the operation lever, calculate, as a pump first target flow rate, a target flow rate of the hydraulic pump for reducing a difference between the actuator target pressure and the actuator pressure, calculate, as a pump second target flow rate, a target flow rate of the hydraulic pump for reducing a difference between an actuator absorption flow rate as a flow rate absorbed by the actuator with driving of the actuator and a pump flow rate as a flow rate supplied from the hydraulic pump to the actuator, calculate a pump final target flow rate as a final target flow rate of the hydraulic pump on the basis of the pump first target flow rate and the pump second target flow rate, and control the hydraulic pump according to the pump final target flow rate.

According to the present invention configured as described above, the difference between the absorption flow rate and the flow rate of the hydraulic pump at a time of a start of operation of the actuator is reduced by feed forward control, and the difference between the actuator target pressure and the actuator pressure is reduced by feedback control. Hence, the pressure of the actuator can be controlled with high accuracy without causing a sharp rise in pressure or hunting at a time of a start of operation of the actuator. It is therefore possible to realize excellent operability and controllability.

Advantages of the Invention

The work machine according to the present invention can realize excellent operability and controllability by controlling the pressure of an actuator with high accuracy without causing a sharp rise in pressure or hunting at a time of a start of operation of the actuator.

Brief Description of the Drawings

FIG. 1 is a side view of a hydraulic excavator in an embodiment of the present invention.
FIG. 2A is a circuit diagram (1/2) of a hydraulic drive system.
FIG. 2B is a circuit diagram (2/2) of the hydraulic drive system.
FIG. 3 is a functional block diagram of a controller.
FIG. 4 is a flowchart illustrating processing by the controller in relation to pump flow rate control.
FIG. 5 is a flowchart illustrating processing by the controller in relation to directional control valve opening control.
FIG. 6 is a flowchart illustrating processing by the controller in relation to bleed-off valve opening control.
FIG. 7 is a diagram illustrating time series changes in an operation lever input amount, an actuator target pressure, an actuator pressure, and an actuator speed in a case of performing individual operation.

Modes for Carrying Out the Invention

In the following, with reference to the drawings, description will be made by taking a hydraulic excavator as an example of a work machine according to an embodiment of the present invention. Incidentally, in the figures, equivalent members are denoted by the same reference characters, and repeated description thereof will be omitted as appropriate.

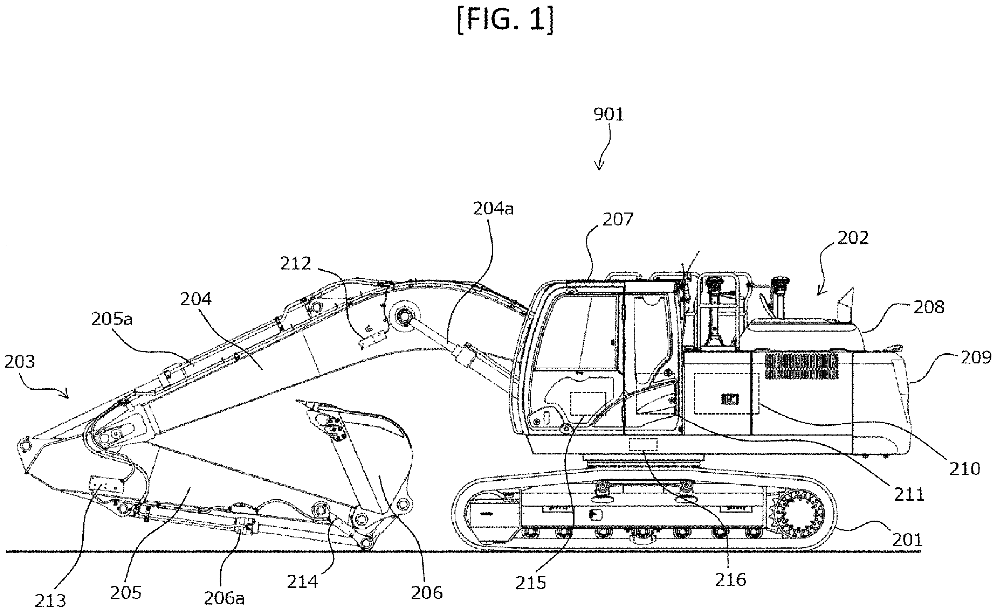

FIG. 1 is a side view of a hydraulic excavator according to the present embodiment. As illustrated in FIG. 1, a hydraulic excavator 901 includes a track structure 201, a swing structure 202 that is swingably disposed on the track structure 201 and constitutes a machine body, and a work device 203 that is attached to the swing structure 202 so as to be turnable in an upward-downward direction and performs soil excavation work and the like. The swing structure 202 is driven by a swing motor 211 as a hydraulic motor which is an actuator.

The work device 203 includes a boom 204 attached to the swing structure 202 so as to be turnable in the upward-downward direction, an arm 205 attached to a distal end of the boom 204 so as to be turnable in the upward-downward direction, a bucket 206 attached to a distal end of the arm 205 so as to be turnable in the upward-downward direction, a boom cylinder 204a as an actuator that drives the boom 204, an arm cylinder 205a as an actuator that drives the arm 205, and a bucket cylinder 206a as an actuator that drives the bucket 206. Operation state sensors 212, 213, and 214 that sense the postures and operation states of the boom 204, the arm 205, and the bucket 206 are installed on the work device 203. Operation state sensors 215 and 216 for sensing the posture and rotational speed of the swing structure 202 are installed in the swing structure 202. Various sensors such as an inclination sensor, a rotational angle sensor, a stroke sensor, and an acceleration sensor (IMU) can be used as the operation state sensors 212 to 216.

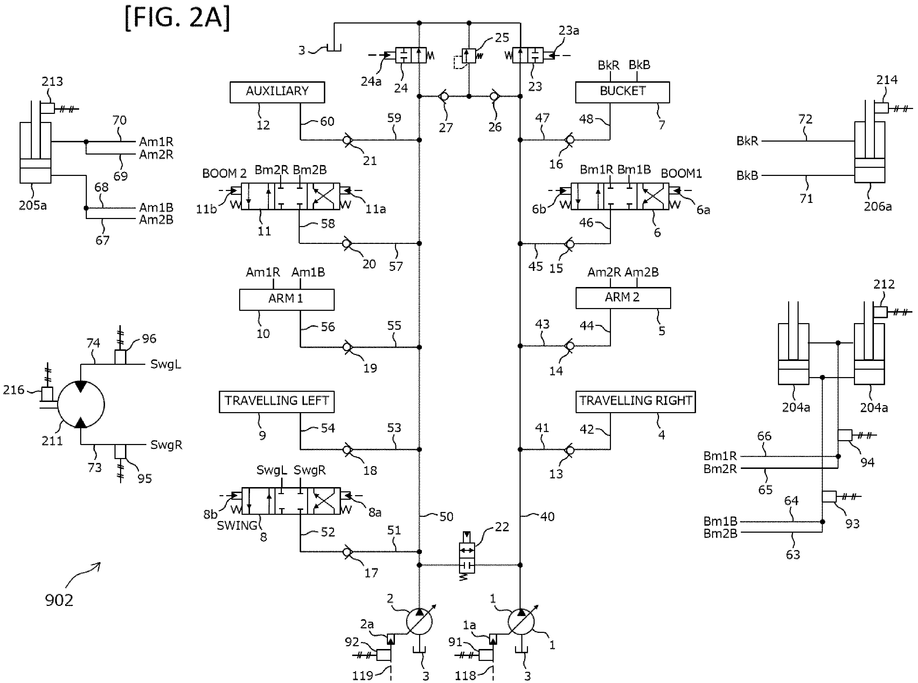

A cab 207 is provided in a front side position on the swing structure 202. A counterweight 209 for ensuring a weight balance of the machine body is attached to a rear side position on the swing structure 202. A machine room 208 is provided between the cab 207 and the counterweight 209. The machine room 208 houses an engine (not illustrated), hydraulic pumps 1 and 2 (illustrated in FIG. 2A), the swing motor 211, a control valve 210, and the like. The control valve 210 controls a flow of a hydraulic operating fluid from the hydraulic pumps to each actuator.

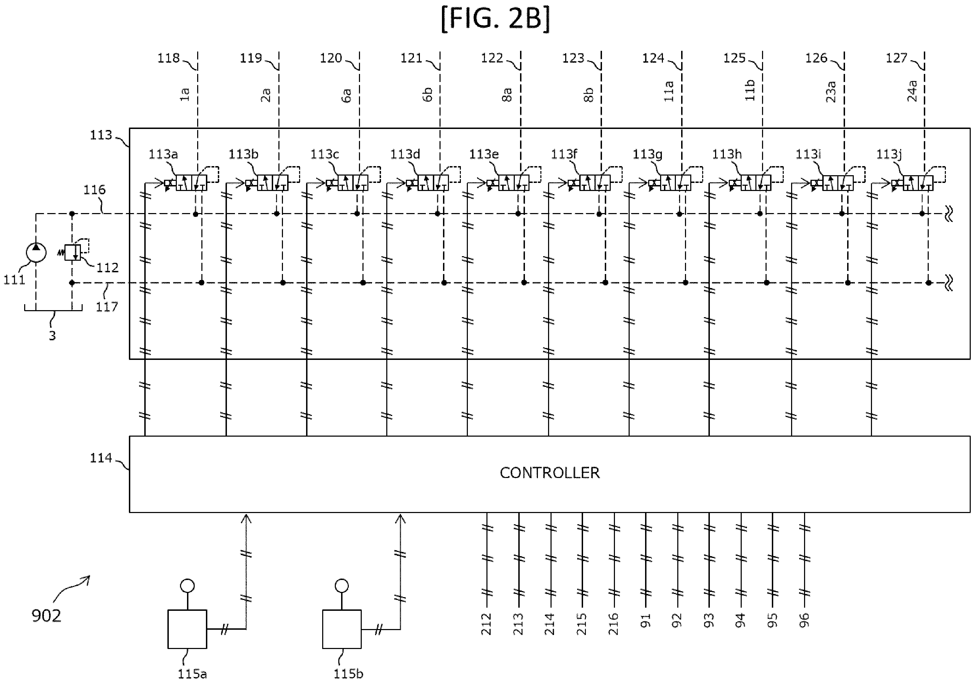

FIG. 2A and FIG. 2B are circuit diagrams of a hydraulic drive system mounted in the hydraulic excavator 901.

(Configuration)

The hydraulic drive system 902 includes two main hydraulic pumps (for example, a first hydraulic pump 1 and a second hydraulic pump 2 constituted by a variable displacement hydraulic pump), a pilot pump 111, and a hydraulic operating fluid tank 3 that supplies an oil to the hydraulic pumps 1 and 2 and the pilot pump 111. The hydraulic pumps 1 and 2 and the pilot pump 111 are driven by the engine (not illustrated).

The tilting angle of the first hydraulic pump 1 is controlled by a regulator attached to the first hydraulic pump 1. The regulator of the first hydraulic pump 1 has a flow rate control command pressure port 1a and is driven by a command pressure that acts on the flow rate control command pressure port 1a. The tilting angle of the second hydraulic pump 2 is controlled by a regulator attached to the second hydraulic pump 2. The regulator of the second hydraulic pump 2 has a flow rate control command pressure port 2a and is driven by a command pressure that acts on the flow rate control command pressure port 2a.

A travelling right directional control valve 4, an arm second directional control valve 5, a boom first directional control valve 6, and a bucket directional control valve 7 are connected in parallel to a delivery flow passage 40 of the first hydraulic pump 1 via meter-in flow passages 41 and 42, meter-in flow passages 43 and 44, meter-in flow passages 45 and 46, and meter-in flow passages 47 and 48, respectively. Check valves 13 to 16 are respectively arranged for the meter-in flow passages 41 and 42, the meter-in flow passages 43 and 44, the meter-in flow passages 45 and 46, and the meter-in flow passages 47 and 48 in order to prevent a reverse flow of the hydraulic fluid to the delivery flow passage 40.

The travelling right directional control valve 4 controls a flow of the hydraulic fluid supplied from the first hydraulic pump 1 to a travelling right motor, not illustrated, of a pair of travelling motors that drive the track structure 201. The arm second directional control valve 5 controls a flow of the hydraulic fluid supplied from the first hydraulic pump 1 to the arm cylinder 205a. The boom first directional control valve 6 controls a flow of the hydraulic fluid supplied from the first hydraulic pump 1 to the boom cylinder 204a. The bucket directional control valve 7 controls a flow of the hydraulic fluid supplied from the first hydraulic pump 1 to the bucket cylinder 206a.

The delivery flow passage 40 is connected to the hydraulic operating fluid tank 3 via a check valve 26 and a relief valve 25 in order to protect the circuit from an excessive rise in pressure. In addition, the delivery flow passage 40 is connected to the hydraulic operating fluid tank 3 via a bleed-off valve 23 in order to discharge an excess delivery oil of the first hydraulic pump 1.

A swing directional control valve 8, a travelling left directional control valve 9, an arm first directional control valve 10, a boom second directional control valve 11, and an auxiliary directional control valve 12 are connected in parallel to a delivery flow passage 50 of the second hydraulic pump 2 via meter-in flow passages 51 and 52, meter-in flow passages 53 and 54, meter-in flow passages 55 and 56, meter-in flow passages 57 and 58, and meter-in flow passages 59 and 60, respectively. Check valves 17 to 21 are respectively arranged for the meter-in flow passages 51 and 52, the meter-in flow passages 53 and 54, the meter-in flow passages 55 and 56, the meter-in flow passages 57 and 58, and the meter-in flow passages 59 and 60 in order to prevent a reverse flow of the hydraulic fluid to the delivery flow passage 50.

The swing directional control valve 8 controls a flow of the hydraulic fluid supplied from the second hydraulic pump 2 to the swing motor 211. The travelling left directional control valve 9 controls a flow of the hydraulic fluid supplied from the second hydraulic pump 2 to a travelling left motor, not illustrated, of the pair of travelling motors that drive the track structure 201. The arm first directional control valve 10 controls a flow of the hydraulic fluid supplied from the second hydraulic pump 2 to the arm cylinder 205a. The boom second directional control valve 11 controls a flow of the hydraulic fluid supplied from the second hydraulic pump 2 to the boom cylinder 204a. The auxiliary directional control valve 12 controls a flow of the hydraulic fluid supplied from the second hydraulic pump 2 to an actuator, not illustrated, that drives a special attachment such as a pulverizer to be provided in place of the bucket 206, for example.

The delivery flow passage 50 is connected to the hydraulic operating fluid tank 3 via a check valve 27 and the relief valve 25 in order to protect the circuit from an excessive rise in pressure. In addition, the delivery flow passage 50 is connected to the hydraulic operating fluid tank 3 via a bleed-off valve 24 in order to discharge an excess delivery oil of the second hydraulic pump 2. Further, the delivery flow passage 50 is connected to the delivery flow passage 40 via a confluence valve 22 in order to merge the delivery oils of the first hydraulic pump 1 and the second hydraulic pump 2 with each other.

In FIG. 2B, a delivery port of the pilot pump 111 is connected to the hydraulic operating fluid tank 3 via a pilot relief valve 112 for generating a pilot primary pressure, and is connected to one input ports of solenoid valves 113a to 113j included in a solenoid valve unit 113 via a flow passage 116 that supplies a delivery pressure delivered from the pilot pump 111. Other input ports of the solenoid valves 113a to 113j are connected to the hydraulic operating fluid tank 3 via a flow passage 117 that introduces a return oil from the solenoid valves 113a to 113j. The solenoid valves 113a to 113j each reduce the pilot primary pressure according to a command signal from a controller 114, and output the reduced pilot primary pressure as a command pressure.

An output port of the solenoid valve 113a is connected to the flow rate control command pressure port 1a of the regulator of the first hydraulic pump 1 via a flow passage 118. An output port of the solenoid valve 113b is connected to the flow rate control command pressure port 2a of the regulator of the second hydraulic pump 2 via a flow passage 119. Output ports of the solenoid valves 113c and 113d are connected to command pressure ports 6a and 6b of the boom first directional control valve 6 via flow passages 120 and 121. Output ports of the solenoid valves 113e and 113f are connected to command pressure ports 8a and 8b of the swing directional control valve 8 via flow passages 122 and 123. Output ports of the solenoid valves 113g and 113h are connected to command pressure ports 11a and 11b of the boom second directional control valve 11 via flow passages 124 and 125. An output port of the solenoid valve 113i is connected to a command pressure port 23a of the bleed-off valve 23 via a flow passage 126. An output port of the solenoid valve 113j is connected to a command pressure port 24a of the bleed-off valve 24 via a flow passage 127. Incidentally, in order to simplify the description, the following are not illustrated: solenoid valves for the travelling right directional control valve 4, solenoid valves for the arm second directional control valve 5, solenoid valves for the bucket directional control valve 7, solenoid valves for the travelling left directional control valve 9, solenoid valves for the arm first directional control valve 10, and solenoid valves for the auxiliary directional control valve 12.

The flow passage 118 is provided with a pressure sensor 91 that senses a flow rate control command pressure of the first hydraulic pump 1. The flow passage 119 is provided with a pressure sensor 92 that senses a flow rate control command pressure of the second hydraulic pump 2. A flow passage 63 connecting a port Bm2B of the boom second directional control valve 11 and the boom cylinder 204a to each other and a flow passage 64 connecting a port Bm1B of the boom first directional control valve 6 and the boom cylinder 204a to each other are provided with a pressure sensor 93 that senses an actuator pressure on the bottom side of the boom cylinder 204a. A flow passage 65 connecting a port Bm2R of the boom second directional control valve 11 and the boom cylinder 204a to each other and a flow passage 66 connecting a port Bm1R of the boom first directional control valve 6 and the boom cylinder 204a to each other are provided with a pressure sensor 94 that senses an actuator pressure on the rod side of the boom cylinder 204a. A flow passage 73 connecting a port SwgR of the swing directional control valve 8 and the swing motor 211 to each other is provided with a pressure sensor 95 that senses one actuator pressure of the swing motor 211. A flow passage 74 connecting a port SwgL of the swing directional control valve 8 and the swing motor 211 to each other is provided with a pressure sensor 96 that senses another actuator pressure of the swing motor 211. Incidentally, in order to simplify the description, the following are not illustrated: pressure sensors that sense actuator pressures of the arm cylinder 205a, the bucket cylinder 206a, the left travelling motor not illustrated, the right travelling motor not illustrated, and the actuator that drives the special attachment not illustrated.

The hydraulic drive system 902 includes a boom operation lever 115a capable of switching operation of the boom first directional control valve 6 and the boom second directional control valve 11 and an arm operation lever 115b capable of switching operation of the arm first directional control valve 10 and the arm second directional control valve 5. Incidentally, in order to simplify the description, the following are not illustrated: a travelling right operation lever for switching operation of the travelling right directional control valve 4, a bucket operation lever for switching operation of the bucket directional control valve 7, a swing operation lever for switching operation of the swing directional control valve 8, a travelling left operation lever for switching operation of the travelling left directional control valve 9, and an auxiliary operation lever for switching operation of the auxiliary directional control valve 12.

The hydraulic drive system 902 includes the controller 114. The controller 114 outputs command signals to the solenoid valves 113a to 113j (including solenoid valves not illustrated) of the solenoid valve unit 113 according to input amounts of the operation levers 115a and 115b, output values of the operation state sensors 212 to 216, and output values of the pressure sensors 91 to 96.

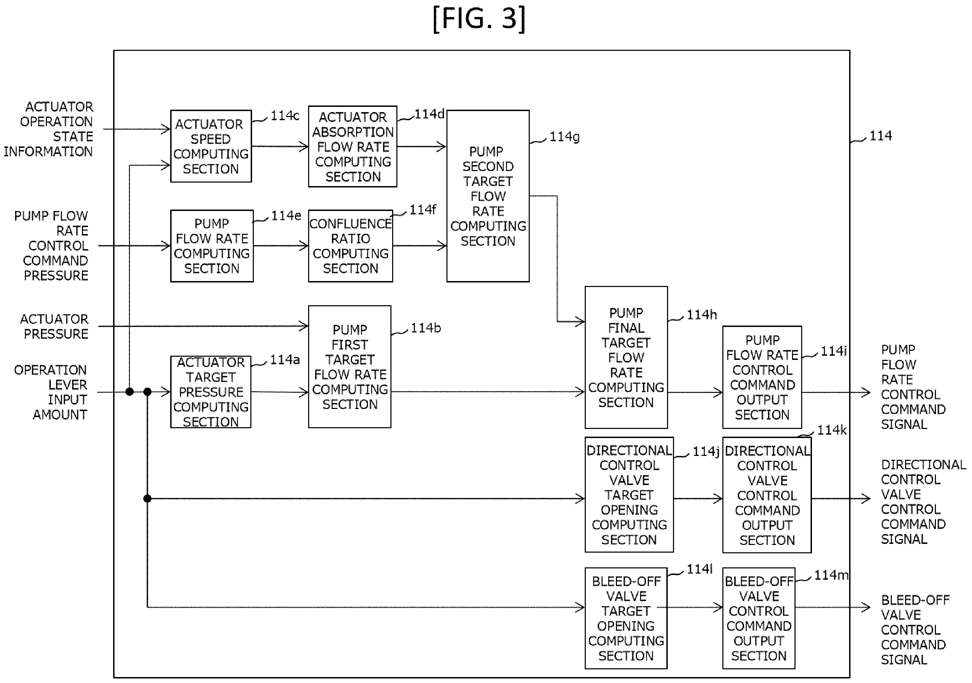

FIG. 3 is a functional block diagram of the controller 114. In FIG. 3, the controller 114 has an actuator target pressure computing section 114a, a pump first target flow rate computing section 114b, an actuator speed computing section 114c, an actuator absorption flow rate computing section 114d, a pump flow rate computing section 114e, a confluence ratio computing section 114f, a pump second target flow rate computing section 114g, a pump final target flow rate computing section 114h, a pump flow rate control command output section 114i, a directional control valve target opening computing section 114j, a directional control valve control command output section 114k, a bleed-off valve target opening computing section 114l, and a bleed-off valve control command output section 114m.

The actuator target pressure computing section 114a calculates an actuator target pressure P_TgtAct corresponding to an operation lever input amount, according to a preset actuator target pressure characteristic with respect to the operation lever input amount. The pump first target flow rate computing section 114b calculates, as a pump first target flow rate Q_TgtPmp1, target flow rates of the hydraulic pumps 1 and 2 for reducing a difference between the actuator target pressure P_TgtAct calculated by the actuator target pressure computing section 114a and an actuator pressure P_Act obtained from the pressure sensors 93 to 96.

The actuator speed computing section 114c calculates an actuator speed V_Act on the basis of operation state information obtained from the operation state sensors 212 to 216. The actuator absorption flow rate computing section 114d calculates a flow rate Q_Act absorbed by the actuator, on the basis of the actuator speed V_Act calculated by the actuator speed computing section 114c and specification information of the actuator.

The pump flow rate computing section 114e calculates a pump flow rate Q_Pmp corresponding to a pump flow rate control command pressure obtained from the pressure sensors 91 and 92, according to a preset pump flow rate characteristic with respect to the pump flow rate control command pressure. The confluence ratio computing section 114f calculates, as a confluence ratio R_Cnf, a ratio of the pump flow rate Q_Pmp of each hydraulic pump to a total pump flow rate Q_PmpSum of the hydraulic pumps 1 and 2 on the basis of the pump flow rate Q_Pmp calculated by the pump flow rate computing section 114e. The pump second target flow rate computing section 114g calculates, as a pump second target flow rate Q_TgtPmp2, target flow rates of the hydraulic pumps 1 and 2 for reducing a difference between the actuator absorption flow rate Q_Act and the pump flow rate Q_Pmp, from the actuator absorption flow rate Q_Act calculated by the actuator absorption flow rate computing section 114d and the confluence ratio R_Cnf of each hydraulic pump calculated by the confluence ratio computing section 114f.

The pump final target flow rate computing section 114h calculates a pump final target flow rate Q_TgtPmp on the basis of the pump first target flow rate Q_TgtPmp1 calculated by the pump first target flow rate computing section 114b and the pump second target flow rate Q_TgtPmp2 calculated by the pump second target flow rate computing section 114g. The pump flow rate control command output section 114i calculates a pump flow rate control command pressure for the pump final target flow rate Q_TgtPmp calculated by the pump final target flow rate computing section 114h, according to a preset solenoid valve command signal characteristic with respect to the pump final target flow rate Q_TgtPmp, and outputs a pump flow rate control command signal corresponding to the pump flow rate control command pressure, to the solenoid valves 113a and 113b for pump flow rate control.

The directional control valve target opening computing section 114j calculates a directional control valve target opening a_TgtMS corresponding to the operation lever input amount, according to a preset directional control valve target opening characteristic with respect to the operation lever input amount. The directional control valve control command output section 114k outputs, to the solenoid valves 113c to 113h for the directional control valves, a command signal (directional control valve control command signal) corresponding to the directional control valve target opening a_TgtMS calculated by the directional control valve target opening computing section 114j, according to a preset solenoid valve command signal characteristic with respect to the directional control valve target opening a_TgtMS.

The bleed-off valve target opening computing section 114l calculates a bleed-off valve target opening corresponding to the operation lever input amount, according to a preset bleed-off valve target opening characteristic with respect to the operation lever input amount. The bleed-off valve control command output section 114m outputs, to the solenoid valves 113i and 113j for the bleed-off valves, a command signal (bleed-off valve control command signal) corresponding to the bleed-off valve target opening, according to a preset solenoid valve command signal characteristic with respect to the bleed-off valve target opening.

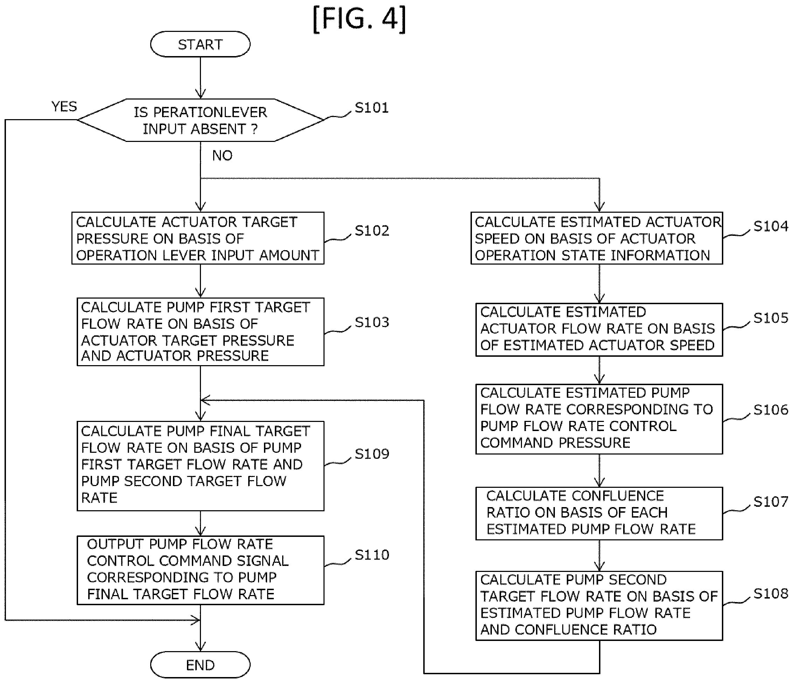

FIG. 4 is a flowchart illustrating processing by the controller 114 in relation to pump flow rate control.

The controller 114 first determines whether or not an operation lever input is absent (step S101). The flow is ended when it is determined that an operation lever input is absent in step S101 (YES).

When it is determined that there is an operation lever input in step S101 (NO), the actuator target pressure computing section 114a calculates the actuator target pressure P_TgtAct corresponding to an operation lever input amount, according to the preset actuator target pressure characteristic with respect to the operation lever input amount (step S102).

Following step S102, the pump first target flow rate computing section 114b calculates the pump first target flow rate Q_TgtPmp1 on the basis of the actuator target pressure P_TgtAct and the actuator pressure P_Act (step S103). Here, the pump first target flow rate Q_TgtPmp1 is calculated such that a difference between the actuator target pressure P_TgtAct and the actuator pressure P_Act is reduced, by using a PID control method, for example.

In parallel with step S102, the actuator speed computing section 114c calculates the actuator speed V_Act on the basis of the operation state information obtained from the operation state sensors 212 to 216 (step S104).

Following step S104, the actuator absorption flow rate computing section 114d calculates the actuator absorption flow rate Q_Act on the basis of the actuator speed V_Act and information such as actuator specifications (step S105). Here, when the actuator is a hydraulic cylinder, the actuator absorption flow rate Q_Act is calculated by calculating the driving speed of a piston as the actuator speed V_Act and multiplying the driving speed by the pressure receiving area of the piston.

Following step S106, the pump flow rate computing section 114e calculates the pump flow rate Q_Pmp corresponding to the pump flow rate control command pressure obtained from the pressure sensors 91 and 92, according to the preset pump flow rate characteristic with respect to the pump flow rate control command pressure (step S106).

Following step S107, the confluence ratio computing section 114f calculates the confluence ratio R_Cnf of each hydraulic pump by the equation of Math. 1, using the pump flow rate Q_Pmp of each hydraulic pump calculated by the pump flow rate computing section 114e and the total pump flow rate Q_PmpSum of the hydraulic pumps 1 and 2 (step S107).

[Math. 1]

$$R\_Cnf = Q\_Pmp / Q\_PmpSum$$

Following step S107, the pump second target flow rate computing section 114g calculates the pump second target flow rate Q_TgtPmp2 for reducing a difference between the actuator absorption flow rate Q_Act and the pump flow rate Q_Pmp by the equation of Math. 2, using the actuator absorption flow rate Q_Act and the confluence ratio R_Cnf (step S108).

[Math. 2]

$$Q\_TgtPmp2 = R\_Cnf \times Q\_Pmp$$

Following step S108, the pump final target flow rate computing section 114h calculates the pump final target flow rate Q_TgtPmp by adding together the pump first target flow rate Q_TgtPmp1 and the pump second target flow rate Q_TgtPmp2 by the equation of Math. 3 (step S109).

[Math. 3]

$$Q\_TgtPmp = Q\_TgtPmp1 + Q\_TgtPmp2$$

Following step S109, the pump flow rate control command output section 114i outputs, to the solenoid valves 113a and 113b for pump flow rate control, a pump flow rate control command signal corresponding to the pump final target flow rate Q_TgtPmp, according to the preset solenoid valve command signal characteristic with respect to the pump final target flow rate Q_TgtPmp. The flow is then ended.

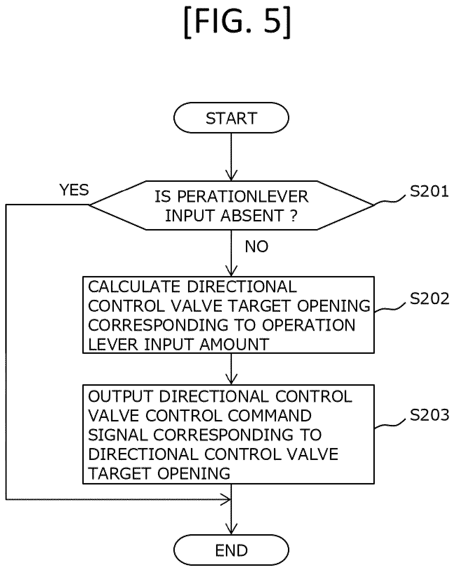

FIG. 5 is a flowchart illustrating processing by the controller 114 in relation to directional control valve opening control.

The controller 114 first determines whether or not an operation lever input is absent (step S201). The flow is ended when it is determined that an operation lever input is absent in step S201 (YES).

When it is determined that there is an operation lever input in step S201 (NO), the directional control valve target opening computing section 114j calculates the directional control valve target opening a_TgtMS corresponding to an operation lever input amount, according to the preset directional control valve target opening characteristic with respect to the operation lever input amount (step S202).

Following step S202, the directional control valve control command output section 114k outputs, to the solenoid valves 113c to 113h for the directional control valves, a command signal (directional control valve control command signal) corresponding to the directional control valve target opening a_TgtMS, according to the preset solenoid valve command signal characteristic with respect to the directional control valve target opening a_TgtMS (step S203). The flow is then ended.

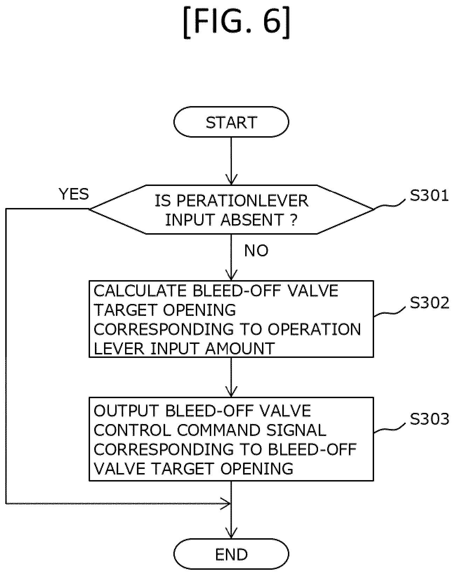

FIG. 6 is a flowchart illustrating processing by the controller 114 in relation to bleed-off valve opening control.

The controller 114 first determines whether or not an operation lever input is absent (step S301). The flow is ended when it is determined that an operation lever input is absent in step S301 (YES).

When it is determined that there is an operation lever input in step S301 (NO), the bleed-off valve target opening computing section 114l calculates a bleed-off valve target opening a_TgtBO corresponding to an operation lever input amount, according to the preset bleed-off valve target opening characteristic with respect to the operation lever input amount (step S302).

Following step S302, the bleed-off valve target opening computing section 114l outputs, to the solenoid valves 113i and 113j for the bleed-off valves, a command signal (bleed-off valve control command signal) corresponding to the bleed-off valve target opening a_TgtBO, according to the preset solenoid valve command signal characteristic with respect to the bleed-off valve target opening a_TgtBO (step S303). The flow is then ended.

(Operation)

Operation in a case of performing individual operation of driving only the swing motor 211 for swing operation of the swing structure 202 having large inertia or the boom cylinder 204a for vertically operating the work device 203 while supporting the whole weight of the work device 203 will be described as an example of operation of the hydraulic drive system 902.

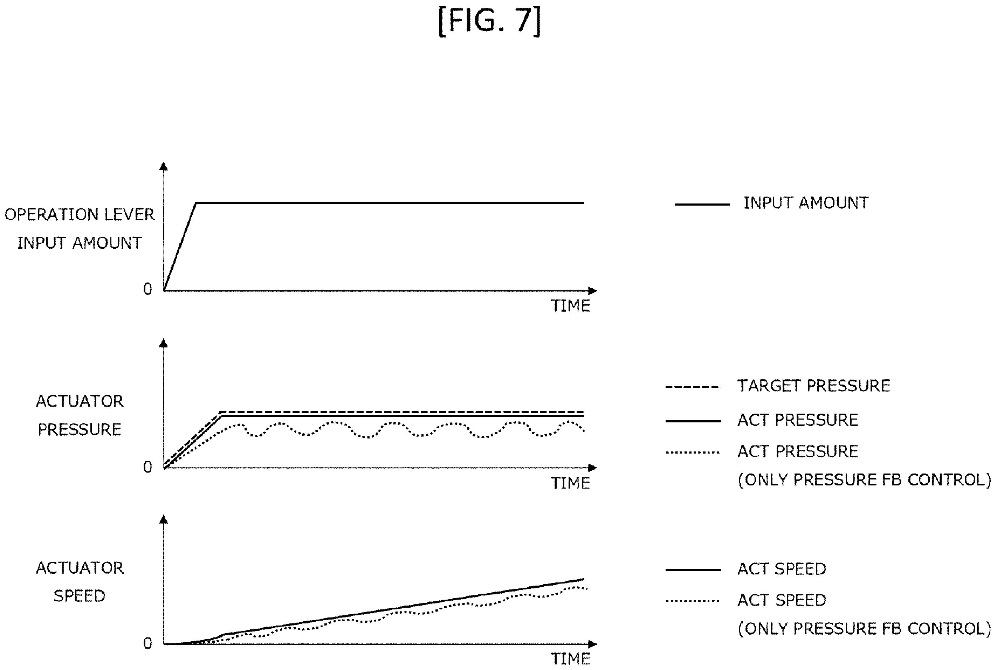

FIG. 7 is a diagram illustrating time series changes in the operation lever input amount, the actuator target pressure, the actuator pressure, and the actuator speed V_Act in the case of performing the individual operation. Incidentally, the actuator pressure P_Act and the actuator speed V_Act in a case of performing only pressure feedback control is displayed as a comparative example.

When an operator operates the swing operation lever, the controller 114 calculates the actuator target pressure on the basis of the operation lever input amount. The pump final target flow rate Q_TgtPmp is calculated on the basis of the actuator target pressure, and a command signal is output to the solenoid valves 113a and 113b for pump flow rate control. The solenoid valves generate a pilot pressure according to the command signal. Receiving the pilot pressure, the hydraulic pumps 1 and 2 adjust a flow rate by changing pump tilting. At this time, a difference between the actuator target pressure P_TgtAct and the actuator pressure P_Act is caused by two factors.

A first factor is a differential pressure P_Error1 between the actuator target pressure P_TgtAct and the actuator pressure P_Act. The differential pressure P_Error1 is expressed by the equation of Math. 4.

[Math. 4]

$$P\_Error1 = P\_TgtAct - P\_Act$$

A second factor is a pressure change amount P_Error2 caused by a difference between the actuator absorption flow rate Q_Act and the flow rates Q_Pmp of the hydraulic pumps 1 and 2. The pressure change amount P_Error2 is expressed by the equation of Math. 5.

[Math. 5]

$$P\_Error2 = (K/V) \times \int (Q\_Pmp - Q\_Act) \, dt$$

Here, K is a bulk modulus of the hydraulic operating fluid, and V is the volume of the hydraulic operating fluid.

For the two pressure error factors, the controller 114 calculates the pump first target flow rate Q_TgtPmp1 for reducing the differential pressure P_Error1 and calculates the pump second target flow rate Q_TgtPmp2 for reducing the pressure change amount P_Error2. The pump flow rates Q_Pmp are thereby adjusted such that both the differential pressure P_Error1 and the pressure change amount P_Error2 are reduced. Hence, the actuator pressure P_Act can be controlled according to the actuator target pressure P_TgtAct. As a result, the swing motor as an actuator that drives the swing structure 202 having large inertia can be made to start operating and accelerate excellently without causing a shock or hunting.

When only pressure feedback control is performed, on the other hand, P_Error1 can be reduced, but P_Error2 cannot be reduced. It is therefore not possible to suppress the pressure change amount P_Error2 caused by the difference between the pump flow rates Q_Pmp and the actuator absorption flow rate Q_Act which difference occurs during a delay time period of pressure feedback control. For example, when the actuator absorption flow rate Q_Act is high as compared with the pump flow rates Q_Pmp, a flow rate shortage occurs, and consequently, the actuator pressure P_Act does not reach the actuator target pressure P_TgtAct as illustrated in FIG. 7. In addition, when the pressure change amount P_Error2 is intended to be reduced by the pressure feedback control and a feedback gain is increased, hunting as illustrated in FIG. 7 may be caused.

In addition, when boom individual operation is performed, the boom cylinder 204a may be driven by merging the flow rates of the hydraulic pump 1 and the hydraulic pump 2. In this case, the controller 114 calculates the pump second target flow rate Q_TgtPmp2 for reducing the pressure change amount P_Error2, after calculating the confluence ratio R_Cnf and thereby recognizing how much each of the flow rates Q_Pmp of the hydraulic pumps 1 and 2 contributes to the absorption flow rate Q_Act of the boom cylinder 204a. It is thus possible to prevent an amount of adjustment of the flow rate of one hydraulic pump from being canceled out by the other hydraulic pump. Hence, the boom cylinder 204a that vertically operates the work device 203 while supporting the whole weight of the work device 203 can be made to start operating and accelerate excellently without causing a shock or hunting.

(Summary)

In the present embodiment, the work machine 901 includes the machine body 202, the work device 203 attached to the machine body 202, the actuators 204a, 205a, 206a, and 211 that drive the machine body 202 or the work device 203, the hydraulic pumps 1 and 2, the directional control valves 5 to 8, 10, and 11 that control flows of the hydraulic fluid supplied from the hydraulic pumps 1 and 2 to the actuators 204a, 205a, 206a, and 211, the operation levers 115a and 115b that give instructions for operation of the actuators 204a, 205a, 206a, and 211, and the controller 114 that controls the directional control valves 5 to 8, 10, and 11 according to input amounts of the operation levers 115a and 115b. The pressure sensors 93 to 96 that sense the actuator pressure P_Act as the pressures of the actuators 204a, 205a, 206a, and 211 are provided, and the controller 114 is configured to calculate the actuator target pressure P_TgtAct as target pressures of the actuators 204a, 205a, 206a, and 211 on the basis of the input amounts of the operation levers 115a and 115b, calculate, as the pump first target flow rate Q_TgtPmp1, target flow rates of the hydraulic pumps 1 and 2 for reducing a difference between the actuator target pressure P_TgtAct and the actuator pressure P_Act, calculate, as the pump second target flow rate Q_TgtPmp2, target flow rates of the hydraulic pumps 1 and 2 for reducing a difference between the actuator absorption flow rate Q_Act as flow rates absorbed by the actuators 204a, 205a, 206a, and 211 with driving of the actuators 204a, 205a, 206a, and 211 and the pump flow rates Q_Pmp supplied from the hydraulic pumps 1 and 2 to the actuators 204a, 205a, 206a, and 211, calculate the pump final target flow rate Q_TgtPmp as a final target flow rate of the hydraulic pump on the basis of the pump first target flow rate Q_TgtPmp1 and the pump second target flow rate Q_TgtPmp2, and control the hydraulic pumps 1 and 2 according to the pump final target flow rate Q_TgtPmp.

According to the present embodiment configured as described above, the difference between the absorption flow rate Q_Act and the flow rates Q_Pmp of the hydraulic pumps 1 and 2 at a time of a start of operation of the actuators 204a, 205a, 206a, and 211 is reduced by feed forward control, and the difference between the actuator target pressure P_TgtAct and the actuator pressure P_Act is reduced by feedback control. Hence, the pressure of the actuators 204a, 205a, 206a, and 211 can be controlled with high accuracy without causing a sharp pressure rise or hunting at a time of a start of operation of the actuators 204a, 205a, 206a, and 211. It is therefore possible to realize excellent operability and controllability.

In addition, the work machine 901 in the present embodiment includes the operation state sensors 212 to 216 that sense an operation state of the machine body 202 or the work device 203, the actuators 204a, 205a, 206a, and 211 are the hydraulic cylinders 204a, 205a, and 206a or the hydraulic motor 211, and the controller 114 is configured to calculate the driving speed V_Act of the hydraulic cylinders 204a, 205a, and 206a or the hydraulic motor 211 on the basis of information from the operation state sensors 212 to 216, and calculate the absorption flow rate of the hydraulic cylinders 204a, 205a, and 206a or the hydraulic motor 211 as the actuator absorption flow rate Q_Act on the basis of the calculated driving speed V_Act. Hence, the pressure of the hydraulic cylinders 204a, 205a, and 206a or the hydraulic motor 211 can be controlled with high accuracy without causing a sharp pressure rise or hunting at a time of a start of operation of the hydraulic cylinders 204a, 205a, and 206a or the hydraulic motor 211. It is therefore possible to realize excellent operability and controllability.

In addition, the work machine 901 in the present embodiment includes a plurality of the hydraulic pumps 1 and 2 that supply the hydraulic fluid to the actuators 204a, 205a, 206a, and 211, and the pump delivery state sensors 91 and 92 that sense delivery states of the plurality of hydraulic pumps 1 and 2. The controller 114 is configured to calculate, as the confluence ratio R_Cnf, ratios of the pump flow rates Q_Pmp to the total pump flow rate Q_PmpSum of the plurality of hydraulic pumps 1 and 2 on the basis of information from the pump delivery state sensors 91 and 92, and calculate the pump second target flow rate Q_TgtPmp2 on the basis of the actuator absorption flow rate Q_Act and the calculated confluence ratio R_Cnf. Accordingly, the pump second target flow rate Q_TgtPmp2 can be calculated for each of the plurality of hydraulic pumps 1 and 2 that supply the hydraulic fluid to the same actuators 204a, 205a, 206a, and 211.

An embodiment of the present invention has been described above in detail. However, the present invention is not limited to the foregoing embodiment and includes various modifications. For example, the foregoing embodiment has been described in detail in order to describe the present invention in an easily understandable manner, and the present invention is not necessarily limited to what includes all of the described configurations.

Description of Reference Characters

1: First hydraulic pump

1a: Flow rate control command pressure port

2: Second hydraulic pump

2a: Flow rate control command pressure port

3: Hydraulic operating fluid tank

4: Travelling right directional control valve

5: Arm second directional control valve

6: Boom first directional control valve

6a: Command pressure port

6b: Command pressure port

7: Bucket directional control valve

8: Swing directional control valve

8a: Command pressure port

8b: Command pressure port

9: Travelling left directional control valve

10: Arm first directional control valve

11: Boom second directional control valve

11a: Command pressure port

11b: Command pressure port

12: Auxiliary directional control valve

13 to 21: Check valve

22: Confluence valve

23: Bleed-off valve

23a: Command pressure port

24: Bleed-off valve

24a: Command pressure port

25: Relief valve

26, 27: Check valve

40: Delivery flow passage

41 to 48: Meter-in flow passage

50: Delivery flow passage

51 to 60: Meter-in flow passage

63 to 66, 71 to 74: Flow passage

91, 92: Pressure sensor (pump delivery state sensor)

93 to 96: Pressure sensor

111: Pilot pump

112: Pilot relief valve

113: Solenoid valve unit

113a to 113j: Solenoid valve

114: Controller

114a: Actuator target pressure computing section

114b: Pump first target flow rate computing section

114c: Actuator speed computing section

114d: Actuator absorption flow rate computing section

114e: Pump flow rate computing section

114f: Confluence ratio computing section

114g: Pump second target flow rate computing section

114h: Pump final target flow rate computing section

114i: Pump flow rate control command output section

114j: Directional control valve target opening computing section

114k: Directional control valve control command output section

114l: Bleed-off valve target opening computing section

114m: Bleed-off valve control command output section

115a: Boom operation lever

115b: Arm operation lever

116 to 127: Flow passage

201: Track structure

202: Swing structure (machine body)

203: Work device
204: Boom
204a: Boom cylinder (hydraulic cylinder, actuator)
205: Arm
205a: Arm cylinder (hydraulic cylinder, actuator)
206: Bucket
206a: Bucket cylinder (hydraulic cylinder, actuator)
207: Cab
208: Machine room
209: Counterweight
210: Control valve
211: Swing motor (actuator)
212 to 216: Operation state sensor
901: Hydraulic excavator (work machine)
902: Hydraulic drive system

**Claims**

1. A work machine comprising:

   a machine body;
   a work device attached to the machine body;
   an actuator that drives the machine body or the work device;
   a hydraulic pump;
   a directional control valve that controls a flow of a hydraulic fluid supplied from the hydraulic pump to the actuator;
   an operation lever that gives an instruction for operation of the actuator; and
   a controller that controls the directional control valve according to an input amount of the operation lever,
   wherein a pressure sensor that senses an actuator pressure as a pressure of the actuator is provided, and
   the controller is configured to

   calculate an actuator target pressure as a target pressure of the actuator on a basis of the input amount of the operation lever,
   calculate, as a pump first target flow rate, a target flow rate of the hydraulic pump for reducing a difference between the actuator target pressure and the actuator pressure,
   calculate, as a pump second target flow rate, a target flow rate of the hydraulic pump for reducing a difference between an actuator absorption flow rate as a flow rate absorbed by the actuator with driving of the actuator and a pump flow rate as a flow rate supplied from the hydraulic pump to the actuator,
   calculate a pump final target flow rate as a final target flow rate of the hydraulic pump on a basis of the pump first target flow rate and the pump second target flow rate, and
   control the hydraulic pump according to the pump final target flow rate.

2. The work machine according to claim 1, comprising:

   an operation state sensor that senses an operation state of the machine body or the work device,
   wherein the actuator is a hydraulic cylinder or a hydraulic motor, and
   the controller is configured to calculate a driving speed of the hydraulic cylinder or the hydraulic motor on a basis of information from the operation state sensor, and calculate an absorption flow rate of the hydraulic cylinder or the hydraulic motor as the actuator absorption flow rate on a basis of the calculated driving speed.

3. The work machine according to claim 1, comprising:

   a plurality of hydraulic pumps including the hydraulic pump, the plurality of hydraulic pumps supplying the hydraulic fluid to the actuator; and
   pump delivery state sensors that sense delivery states of the plurality of hydraulic pumps,
   wherein the controller is configured to

   calculate, as a confluence ratio, a ratio of the pump flow rate to a total pump flow rate of the plurality of

11

hydraulic pumps on a basis of information from the pump delivery state sensors, and calculate the pump second target flow rate on a basis of the actuator absorption flow rate and the calculated confluence ratio.

4. The work machine according to claim 1,
wherein the controller is configured to calculate the pump final target flow rate by adding together the pump first target flow rate and the pump second target flow rate.

[FIG. 1]

EP 4 563 827 A1

[FIG. 2A]

[FIG. 2B]

**[FIG. 3]**

EP 4 563 827 A1

[FIG. 4]

START

IS PERATIONLEVER INPUT ABSENT ?  — S101

YES

NO

CALCULATE ACTUATOR TARGET PRESSURE ON BASIS OF OPERATION LEVER INPUT AMOUNT  — S102

CALCULATE ESTIMATED ACTUATOR SPEED ON BASIS OF ACTUATOR OPERATION STATE INFORMATION  — S104

CALCULATE PUMP FIRST TARGET FLOW RATE ON BASIS OF ACTUATOR TARGET PRESSURE AND ACTUATOR PRESSURE  — S103

CALCULATE ESTIMATED ACTUATOR FLOW RATE ON BASIS OF ESTIMATED ACTUATOR SPEED  — S105

CALCULATE ESTIMATED PUMP FLOW RATE CORRESPONDING TO PUMP FLOW RATE CONTROL COMMAND PRESSURE  — S106

CALCULATE PUMP FINAL TARGET FLOW RATE ON BASIS OF PUMP FIRST TARGET FLOW RATE AND PUMP SECOND TARGET FLOW RATE  — S109

CALCULATE CONFLUENCE RATIO ON BASIS OF EACH ESTIMATED PUMP FLOW RATE  — S107

OUTPUT PUMP FLOW RATE CONTROL COMMAND SIGNAL CORRESPONDING TO PUMP FINAL TARGET FLOW RATE  — S110

CALCULATE PUMP SECOND TARGET FLOW RATE ON BASIS OF ESTIMATED PUMP FLOW RATE AND CONFLUENCE RATIO  — S108

END

EP 4 563 827 A1

## [FIG. 5]

```
                    ┌─────────┐
                    │  START  │
                    └────┬────┘
                         │
                         ▼
          YES    ╱──────────────────╲
        ┌────────  IS PERATIONLEVER   ──────  S201
        │        ╲  INPUT ABSENT ?   ╱
        │         ╲─────────────────╱
        │                 │ NO
        │                 ▼
        │   ┌───────────────────────────────┐
        │   │ CALCULATE DIRECTIONAL          │
        │   │ CONTROL VALVE TARGET OPENING   ──── S202
        │   │ CORRESPONDING TO OPERATION     │
        │   │ LEVER INPUT AMOUNT             │
        │   └───────────────┬───────────────┘
        │                   ▼
        │   ┌───────────────────────────────┐
        │   │ OUTPUT DIRECTIONAL CONTROL     │
        │   │ VALVE CONTROL COMMAND          │
        │   │ SIGNAL CORRESPONDING TO        ──── S203
        │   │ DIRECTIONAL CONTROL VALVE      │
        │   │ TARGET OPENING                 │
        │   └───────────────┬───────────────┘
        │                   │
        └───────────────────┤
                            ▼
                    ┌─────────┐
                    │   END   │
                    └─────────┘
```

[FIG. 6]

```
                    START
                      |
                      v
    YES        IS PERATIONLEVER          S301
  <-----------  INPUT ABSENT ?  ------->
  |                   |
  |                   NO
  |                   |
  |                   v
  |        CALCULATE BLEED-OFF VALVE      S302
  |        TARGET OPENING
  |        CORRESPONDING TO OPERATION
  |        LEVER INPUT AMOUNT
  |                   |
  |                   v
  |        OUTPUT BLEED-OFF VALVE         S303
  |        CONTROL COMMAND SIGNAL
  |        CORRESPONDING TO BLEED-OFF
  |        VALVE TARGET OPENING
  |                   |
  -------------------->
                      |
                      v
                    END
```

EP 4 563 827 A1

[FIG. 7]

OPERATION LEVER INPUT AMOUNT

—— INPUT AMOUNT

ACTUATOR PRESSURE

------ TARGET PRESSURE

—— ACT PRESSURE

········ ACT PRESSURE
(ONLY PRESSURE FB CONTROL)

ACTUATOR SPEED

—— ACT SPEED

········ ACT SPEED
(ONLY PRESSURE FB CONTROL)

EP 4 563 827 A1

## INTERNATIONAL SEARCH REPORT

| International application No. |
| --- |
| **PCT/JP2023/028804** |

| | |
| --- | --- |
| **A. CLASSIFICATION OF SUBJECT MATTER** | |

***F15B 11/02***(2006.01)i; ***E02F 9/22***(2006.01)i; ***F15B 11/028***(2006.01)i
FI:    F15B11/02 C; F15B11/028 G; E02F9/22 C; E02F9/22 R

According to International Patent Classification (IPC) or to both national classification and IPC

**B.    FIELDS SEARCHED**

Minimum documentation searched (classification system followed by classification symbols)

F15B11/00-11/22, F15B21/14, E02F9/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2022-079112 A (KOBELCO CONSTRUCTION MACHINERY LTD.) 26 May 2022 (2022-05-26) <br> entire text, all drawings | 1-4 |
| A | JP 2020-133705 A (HITACHI CONSTR. MACH. CO., LTD.) 31 August 2020 (2020-08-31) <br> entire text, all drawings | 1-4 |
| A | JP 08-128406 A (HITACHI CONSTR. MACH. CO., LTD.) 21 May 1996 (1996-05-21) <br> entire text, all drawings | 1-4 |
| A | US 2017/0211597 A1 (VOLVO CONSTRUCTION EQUIPMENT AB) 27 July 2017 (2017-07-27) <br> entire text, all drawings | 1-4 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 September 2023** | **10 October 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/028804**

| Patent document cited in search report | | | Publication date (day/month/year) | Patent family member(s) | | | Publication date (day/month/year) |
|---|---|---|---|---|---|---|---|
| JP | 2022-079112 | A | 26 May 2022 | WO | 2022/102391 | A1 | |
| JP | 2020-133705 | A | 31 August 2020 | US | 2021/0332563 | A1 | |
| | | | | entire text, all drawings | | | |
| | | | | WO | 2020/166192 | A1 | |
| | | | | EP | 3926177 | A1 | |
| | | | | CN | 113227586 | A | |
| | | | | KR | 10-2021-0107765 | A | |
| JP | 08-128406 | A | 21 May 1996 | (Family: none) | | | |
| US | 2017/0211597 | A1 | 27 July 2017 | WO | 2015/152775 | A1 | |

Form PCT/ISA/210 (patent family annex) (January 2015)

**EP 4 563 827 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3403535 B
- JP 5130353 B